# EUROPEAN PATENT APPLICATION

(11) **EP 4 716 257 A1**
(43) Date of publication of application: **25.03.2026**
(21) Application number: 25191552.6
(22) Date of filing: 24.07.2025
(51) Int. Cl.: H04R 29/00, H04R 1/08, H04R 3/00

(54) **APPARATUS AND METHOD FOR DISPLAYING VOLUME LEVEL IN REAL-TIME**

(30) Priority: 20.09.2024 CN 202411322725
(71) Applicant: Harman International Industries, Inc., Stamford, Connecticut 06901 (US)
(72) Inventor: WU, Hongke, Shenzen, 518067 (CN); LI, Hong, Shenzen, 518067 (CN); ZHANG, Yi, Shenzen, 518067 (CN)
(74) Representative: Kraus & Lederer PartGmbB

(57) **Abstract**

An apparatus for displaying a volume level in real time while a microphone picks up an audio signal is provided. The apparatus includes a first stage amplifier amplifying an audio input signal into a first amplified signal, and a second stage amplifier amplifying the first amplified signal into a second amplified signal. The apparatus further includes a volume detection module comparing the first amplified signal and the second amplified signal with a volume display threshold to determine a volume level to be displayed, and a volume display unit displays the volume level in real time. A method for displaying a volume level in real time while a microphone picks up an audio signal is also provided.

## Description

### Technical Field

The present inventive subject matter relates to audio processing and display, and more particularly, the present inventive subject matter relates to an apparatus and a method for displaying a volume level in real time during picking-up of an audio signal.

### Background

With the ever-growing popularity of the application of we-media in daily life, live streaming or product promotion by streamers on various platforms has become an increasingly common lifestyle. When the streamers are live streaming, they are more likely to see picture content that is being played by them, but usually fail to timely notice feedback on an audio effect from viewers during the live streaming.

Therefore, there is a need for a technical solution that allows monitoring volume of audio picking-up during recording of an audio signal, so that when a user is picking up their voice using a microphone, a volume level of a picked-up audio signal can be synchronously displayed locally, to obtain the best audio recording and playing experience.

### Summary of the Invention

According to an aspect of the present disclosure, an apparatus for displaying a volume level in real time is provided. The apparatus for displaying a volume level in real time includes at least one microphone sensor configured to pick up an audio input signal. The apparatus for displaying a volume level in real time further includes an amplifier module, which includes a first stage amplifier and a second stage amplifier. The first stage amplifier is configured to amplify the audio input signal into a first amplified signal, and the second stage amplifier is configured to amplify the first amplified signal into a second amplified signal. The apparatus for displaying a volume level in real time further includes a volume detection module. The volume detection module is configured to compare at least one of the first amplified signal and the second amplified signal with a volume display threshold to determine a volume level to be displayed. Then, a volume display unit displays the volume level in real time.

According to another aspect of the present disclosure, a method for displaying a volume level in real time is provided. The method for displaying a volume level in real time includes steps of: picking up, by at least one microphone sensor, an audio input signal, then amplifying, by an amplifier module including a first stage amplifier and a second stage amplifier, the audio input signal into a first amplified signal through the first stage amplifier, and then amplifying, by the second stage amplifier, the first amplified signal into a second amplified signal. The method for displaying a volume level in real time further includes a step of comparing, by a volume detection module, at least one of the first amplified signal and the second amplified signal with a volume display threshold to determine a volume level to be displayed. Then, a volume display unit displays the volume level in real time.

### Brief Description of the Drawings

These and/or other features, aspects and advantages of the present invention will be better understood upon reading the following detailed description with reference to the accompanying drawings, where the same characters represent the same parts throughout these accompanying drawings, in which:
FIG. 1 shows a schematic structural diagram of an apparatus for displaying a volume level in real time according to one or more embodiments of the present inventive subject matter as an example;
FIG. 2a schematically shows a schematic diagram of a volume display unit including a VU meter composed of 8 RGB LEDs according to one or more embodiments of the present inventive subject matter;
FIG. 2b shows a schematic diagram of volume levels in an ascending order displayed by a VU meter composed of 8 RGB LEDs according to one or more embodiments of the present inventive subject matter as an example;
FIG. 3 shows a flowchart of a method for displaying a volume level in real time according to one or more embodiments of the present inventive subject matter as an example; and
FIG. 4 shows an example flowchart of using a volume detection module to determine, from 8 RGB LEDs, the number of LEDs that emit light when a microphone gain value is 12 dB as an example.

### Detailed Description

The description of various embodiments is given below for illustrative purposes, but is not intended to be exhaustive or limit the disclosed embodiments. Many modifications and alterations will be apparent to those of ordinary skills in the art without departing from the scope and spirit of the described embodiments.

Visualization of a volume level of audio may be achieved using a VU meter. For example, the VU meter may have a light-emitting display mode. For example, during picking-up of an audio signal by a microphone sensor, different volume levels of the audio signal may be displayed in real time through different numbers and colors of light emitting diodes in a group of light emitting diodes. Therefore, a solution may be designed to set a volume level display apparatus locally on a microphone device used by a user to pick up an audio input signal, to enable the microphone device to reflect different volume levels of the audio input signal correspondingly through different numbers and colors of lights.

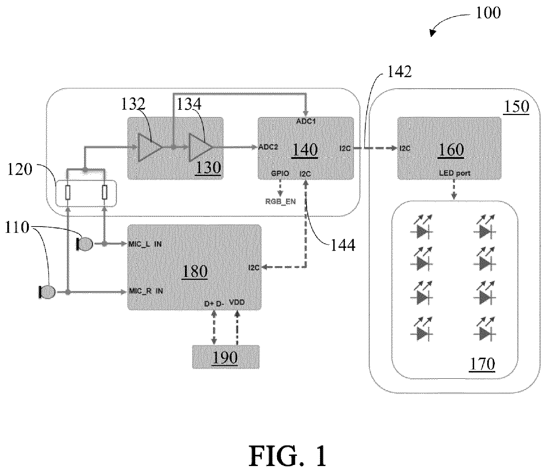

FIG. 1 shows a schematic structural diagram 100 of an apparatus for displaying a volume level in real time according to one or more embodiments of the present inventive subject matter as an example. The apparatus for displaying a volume level includes at least one microphone sensor 110 for picking up an audio input signal. As shown in FIG. 1, for a stereo audio signal, the microphone sensor may pick up left and right audio input signals. The audio input signal picked up by the microphone sensor 110 may be an analog signal. For example, the picked-up audio input signal may be an electrical signal. In some examples, for example, during live streaming by a streamer, when the user (streamer) is speaking, the microphone sensor 110 picks up an audio input signal of the user's voice, where the audio input signal is first attenuated by a resistor isolator 120 and then sent to an amplifier module 130 for amplification by two stages of amplifiers. In an example, the resistor isolator 120 can attenuate each of the left and right audio input signals picked up by the microphone sensor 110 by, for example, a factor of 13.5, so as to attenuate the audio input signal by a total factor of 27. The audio input signal attenuated by the resistor isolator 120 is input into the amplifier module 130.

The amplifier module 130 includes a first stage amplifier 132 and a second stage amplifier 134, where an amplification factor of the first stage amplifier 132 may be the same as or different from an amplification factor of the second stage amplifier 134. For example, the amplification factor of the second stage amplifier 134 may be greater than the amplification factor of the first stage amplifier 132. The audio input signal is amplified through first-time amplification by the first stage amplifier 132 to form a first amplified signal. Then the first amplified signal is amplified through second-time amplification by the second stage amplifier 134 to form a second amplified signal. For example, the audio input signal may be amplified by, for example, a factor of 2.56, through the first-time amplification by the first stage amplifier 132, to form the first amplified signal. Then the first amplified signal may be amplified by, for example, a factor of 120.5, through the second-time amplification by the second stage amplifier 134, to form the second amplified signal. Therefore, compared with the second amplified signal resulting from the two times of amplification with the factors of 2.56 and 120.5 respectively by the first stage amplifier 132 and the second stage amplifier 134, the first amplified signal resulting from only the amplification with the factor of 2.56 by the first stage amplifier 132 is weaker than the second amplified signal.

The apparatus for displaying a volume level of the present inventive subject matter further includes a volume detection module 140, where the volume detection module 140 is configured to determine a volume level to be displayed of a volume signal. As shown in FIG. 1, the first amplified signal and the second amplified signal resulting from amplification by the amplifier module 130 are sent to the volume detection module 140 through two signal acquisition ports ADC 1 and ADC 2 of the volume detection module respectively. The volume detection module 140 is configured to compare the first amplified signal and the second amplified signal with an audio display threshold to determine the volume level to be displayed.

The apparatus for displaying a volume level provided by the present inventive subject matter further includes a volume display unit 150. In some examples, the volume display unit 150 may have a form of, for example, a volume meter (VU meter), to visually present a volume level of an audio signal. In one or more embodiments of the present inventive subject matter, the volume display unit 150 may include a display driving module 160. The above volume level determined by the volume detection module 140 may be sent to the display driving module 160 in the volume display unit 150, for example, through an I2C bus interface 142. The display driving module 160 may display the current volume level of the audio signal in real time according to the volume level to be displayed that is determined by the volume detection module 140. In some examples, the volume display unit 150 may include a group 170 of LEDs including a plurality of RGB LEDs. The current volume level may be displayed by causing a corresponding number of RGB LEDs in the group 170 of LEDs to emit light. In such an example, the volume level to be displayed may be a number of LEDs to be driven to emit light that are determined from the group 170 of LEDs. In this example, the display driving module 160 may be enabled to drive a corresponding number of RGB LEDs in the group 170 of LEDs to emit light. For example, the higher the volume level, the more LEDs are driven to emit light. In addition, in some examples, the current volume level may be displayed in different colors. For example, when indicating a low volume level, a small number of LEDs may be caused to emit green light, to indicate that the current volume level of the audio signal is normal. When indicating a high volume level, more LEDs may be caused to emit yellow and orange light. Further, LEDs emitting red light may indicate that the volume level is excessively high and may cause sound distortion.

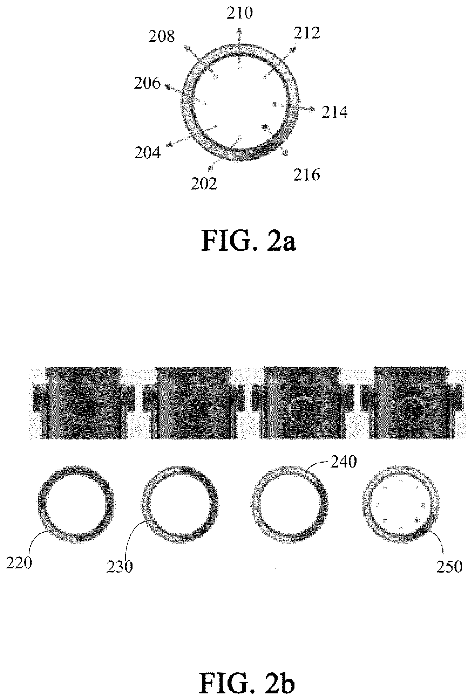

In one or more embodiments of the present inventive subject matter, a group of LED combinations including a plurality of RGB LEDs may be employed to display a volume level of an audio signal. FIG. 2a shows a schematic diagram of a volume display unit including a VU meter composed of 8 RGB LEDs according to one or more embodiments of the present inventive subject matter as an example. For example, as shown in FIG. 2a, 8 RGB LEDs 202, 204, 206, 208, 210, 212, 214, and 216 may be arranged, for example, in an annular shape, so that when these RGB LEDs emit light, a form like a VU meter can be formed to display the volume level.

FIG. 2b shows a schematic diagram of volume levels in an ascending order displayed by a VU meter composed of 8 RGB LEDs according to one or more embodiments of the present inventive subject matter as an example. An upper half of FIG. 2b schematically shows a schematic diagram of a group of LEDs arranged on a microphone device. A lower half of FIG. 2b correspondingly shows display of volume levels in an ascending order. When the volume level is low, the display driving module may drive a small number of LEDs to emit green light. For example, from low volume to high volume, a corresponding number of 1 to 5 LEDs are driven to emit green light. For example, when the volume is low, the display driving module drives 2 RGB LEDs to emit light at the same time, and both of the LEDs emit green light, so that the VU meter displays, for example, 25% light emission 220 in green. When the volume increases, the first to fourth LEDs may be driven to emit green light, or in addition to the first to fourth LEDs, the fifth LED may also be driven to emit light-green light at the same time, so that the VU meter displays, for example, about 50% light emission 230. When the volume is high, the sixth LED may also be driven to emit light, and may emit, for example, yellow light, so that the VU meter displays, for example, 70% light emission 240. When the volume further increases, the seventh LED may be further driven to emit light at the same time, and emit, for example, orange light, to indicate that the current volume of the audio signal is efficiently high. If the volume continues to increase to be higher, all the 8 LEDs may be driven to emit light, and finally the eighth LED may emit, for example, red light to warn that the current volume of the audio signal is excessively high and may cause sound distortion. In this case, the VU meter displays, for example, 100% light emission 250.

Referring back to FIG. 1, in one or more embodiments of the present inventive subject matter, the volume detection module 140 may retrieve a corresponding audio display threshold from an audio display threshold table corresponding to a microphone gain value based on the microphone gain value. The microphone gain value may be fed to the volume detection module 140 by a gain feedback module 180 of the microphone device. The gain feedback module 180 may be configured to enable a user to adjust the microphone gain value according to the audio level displayed by the volume display unit 150, and apply the corresponding microphone gain to the audio input signal. In some examples, when seeing the audio level displayed by the volume display unit 150, the user may correspondingly adjust the microphone gain value to obtain an audio output signal with an appropriate volume level. For example, when the user sees that the current volume of the audio signal displayed by the volume display unit 150 is low, for example, only 1 or 2 RGB LEDs emit light, and the volume level is displayed in full green, the user may perform adjustment to increase the microphone gain value, thereby increasing the volume level of the microphone audio output signal. For example, when the user sees that the current volume of the audio signal displayed by the volume display unit 150 is excessively high, for example, more than 6 LEDs emit light, and yellow or orange or even red appears in the volume level, the user may perform adjustment to reduce the microphone gain value, thereby reducing the volume level of the microphone audio output signal. In this way, the gain feedback module 180 can adjust a corresponding gain applied to the audio input signal picked up by the microphone sensor, and can output, for example, through a USB port, the audio output signal resulting from microphone gain processing.

The audio input signal picked up by the microphone may be input to the gain feedback module 180, from which the audio output signal may be output. For example, the audio signal may be output through the USB port. In some examples, the audio output signal may be output to an external device through various conversion interfaces 190. For example, the microphone audio output signal may be transmitted to user equipment through the USB-Type C conversion interface 190. The user equipment may include, for example, at least one of a personal computer, a smart mobile device, a personal assistant device, or other live streaming devices.

Referring back to FIG. 1, the microphone gain value adjusted by the user may be sent to the volume detection module 140 through another bus interface 144 (e.g., an I2C interface). The volume detection module 140 then may query the corresponding volume display threshold table based on the microphone gain value, to retrieve the corresponding volume display threshold, thereby determining the volume level to be displayed.

In one or more embodiments of the present inventive subject matter, the volume display threshold table may be defined correspondingly for each microphone gain value. That is, each volume display threshold table is configured to correspond to one of a plurality of microphone gain values. The volume display threshold table includes a signal threshold causing a corresponding number of RGB LEDs in the group of LEDs to emit light. The volume detection module may retrieve the corresponding volume display threshold from the volume display threshold table based on the microphone gain value currently adjusted by the user, and compare an amplified audio input signal acquired from an acquisition port ADC with the corresponding volume display threshold.

In some examples, the microphone gain value may be set to one of 28 values within the range of, for example, 0 to 27 dB. The volume display threshold table may be defined by measuring 28 sets of volume display threshold data through adjustment to each microphone gain value, and corresponding 28 volume display threshold tables are written into a software program of the volume detection module. The volume detection module may correspondingly retrieve the corresponding volume display threshold from these volume display threshold tables to determine the volume level to be displayed, for example, a number of RGB LEDs in a group of LEDs that will be driven to emit light.

The definition of the corresponding volume display threshold table is described below using the microphone gain value set to 12 dB as an example. Table 1 shows the corresponding audio display threshold table defined, for example, when the microphone gain value is 12 dB.

**Table 1 Audio display threshold table corresponding to the microphone gain value of 12 dB**

| Microphone gain value is 12 dB | | | |
|---|---|---|---|
| Number of LEDs emitting light | Audio output signal (dBFS) | ADC 2 threshold (hexadecimal) | ADC 1 threshold (hexadecimal) |
| 8 | -4 | | 008F |
| 7 | -8 | | 0057 |
| 6 | -12 | | 0034 |
| 5 | -16 | | 001E |
| 4 | -20 | | 0016 |
| 3 | -24 | OEA2 | 000A |
| 2 | -28 | 0699 | |
| 1 | -32 | 03B1 | |

For the apparatus for displaying a volume level provided by the present inventive subject matter, after the microphone is detached, the audio input signal may be sent to a microphone port using, for example, an Audio Precision instrument (AP, audio analyzer), and the audio output signal output by the microphone device through, for example, a USB, may be tested using, for example, an Audacity application. For example, a 1 kHz sine wave signal is sent to the microphone port as the left and right audio input signals using the audio analyzer, and an output of the Audio Precision instrument gradually increases until the Audacity application tests an audio output signal of -32 dBFS. A value on the acquisition port ADC at this time is set to a threshold causing the first LED to emit light. Then, printing is performed once every 40 ms through, for example, a USB serial port tool, to acquire a maximum value on the acquisition port ADC 2, the value is refreshed 50 times, and then a minimum value of the 50 values is found as the threshold causing the first LED to emit light. A threshold causing 1 to 2 LEDs to emit light is set by the acquisition port ADC 2, and a threshold causing 3 to 8 LEDs to emit light is set by the acquisition port ADC 1. Thresholds for the other 7 LEDs may be tested in the same way.

When the audio output signal of the microphone device is -20 dBFS (for example, on the USB port), the acquisition port ADC 2 is equal to 0FFF, reaching a full scale. Therefore, 0EA2 in Table 1 above is a threshold upper limit (i.e., the maximum value) of the acquisition port ADC 2. Those skilled in the art can imagine that the volume display threshold tables for the other 27 microphone gain values may also be tested correspondingly.

In some examples, for example, an audio coding-decoding integrated single device can be used to implement microphone gain processing, and the audio coding-decoding integrated single device can pick up a microphone audio signal and convert it from an analog signal into a digital signal. The digital audio signal resulting from such the analog-to-digital conversion is then sent to a microcontroller unit (MCU) through, for example, a digital audio interface (I2S). The microcontroller unit may be configured to determine a volume level to be displayed currently. In some examples, an MCU (e.g., an ARM Cortex-M4 chip) of a 32-bit processor may be configured to perform amplification and modulation to output a PWM pulse width modulation signal, and then correspondingly control a VU meter including, for example, RGB LEDs, to display the volume level. However, such a volume display solution has high implementation costs, resulting in an expensive product, which is not conducive to market promotion.

By contrast, in one or more embodiments of the present inventive subject matter, the audio input signal may be directly output to the acquisition port ADC of the volume detection module after being amplified in two stages by the amplifier module. Additionally or alternatively, the volume detection module may be implemented using an 8-bit processing unit. For example, the volume detection module may use a CSU38F20 chip to implement the comparison with the volume display threshold and then determine the volume level to be displayed. Then, in the apparatus of the present inventive subject matter, an LED driver may be used as the display driving module to drive the RGB LEDs to emit light. Therefore, the apparatus provided by the present inventive subject matter may include no any module for audio coding-decoding processing or digital-to-analog conversion processing, thereby realizing, with low costs, real-time display of a volume level of an audio signal during picking-up of the audio signal.

Furthermore, in the apparatus for displaying a volume level provided by the present inventive subject matter, the gain feedback module only plays the role of feeding back the microphone gain value. Therefore, alternatively, the gain feedback module can be easily implemented using, for example, a CM6646 chip. This further saves the costs of a microphone device product, and can realize real-time display of the volume level during picking-up of the audio input signal.

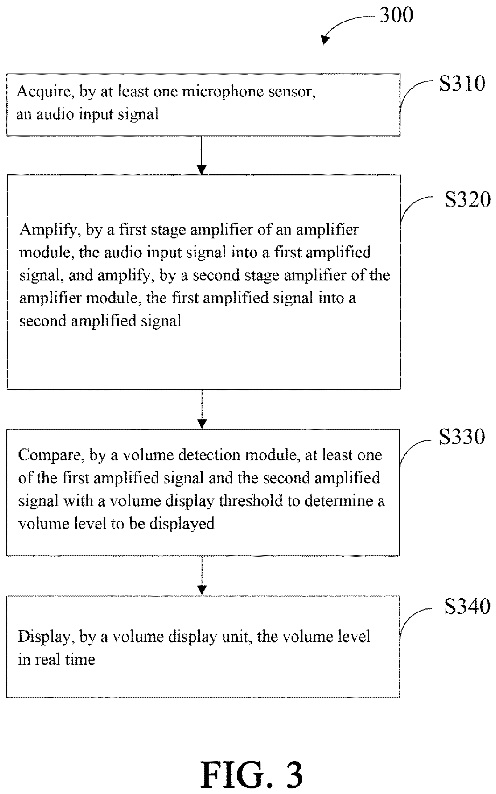

FIG. 3 shows a flowchart 300 of a method for displaying a volume level in real time according to one or more embodiments of the present inventive subject matter as an example. First, in step S310, an audio input signal is acquired by at least one microphone sensor. In this step, when a user is speaking, for example, when a streamer is live streaming, the microphone sensor of a microphone device used by the user picks up an audio input signal of the user's voice. For example, the audio input signal may be recorded as left and right stereo audio input signals.

In step S320, the audio input signal is amplified into a first amplified signal by a first stage amplifier of an amplifier module, and the first amplified signal is amplified into a second amplified signal by a second stage amplifier of the amplifier module, where the first stage amplifier and the second stage amplifier may have amplification factors the same as or different from each other. For example, the amplification factor of the second stage amplifier may be greater than the amplification factor of the first stage amplifier. The first amplified signal is sent to an acquisition port ADC 1 of a volume detection module, and the second amplified signal is sent to an acquisition port ADC 2 of the volume detection module. In this step, before being amplified, the audio input signal may be attenuated by, for example, a factor of 13.5, by a resistor isolator. Then, the audio input signal is amplified by, for example, a factor of 2.56, into the first amplified signal by the first stage amplifier in the amplifier module. The first amplified signal is sent from the acquisition port ADC 1 to the volume detection module. The first amplified signal is further amplified by, for example, a factor of 120.5, into the second amplified signal by the second stage amplifier in the amplifier module. The second amplified signal is sent from the acquisition port ADC 2 to the volume detection module.

In step S330, the volume detection module compares the first amplified signal and the second amplified signal with a volume display threshold to determine a volume level to be displayed. In this step, the volume detection module switches every 20 ms between receiving the first amplified signal from the acquisition port ADC 1 and receiving the second amplified signal from the acquisition port ADC 2, and acquires 2000 signal values on each acquisition port. The volume detection module reads a current microphone gain value from a gain feedback module through an I2C bus interface. The volume detection module then queries a volume display threshold table corresponding to the microphone gain value, and can determine the volume level to be displayed by comparing the acquired amplified signal with data in the volume display threshold table. As an example, the volume level to be displayed may be a record of a number of RGB LEDs in a group of LEDs that will be caused to emit light. Therefore, the determined number of RGB LEDs that will be caused to emit light may be stored in a storage device, such as a register, and refreshed in real time.

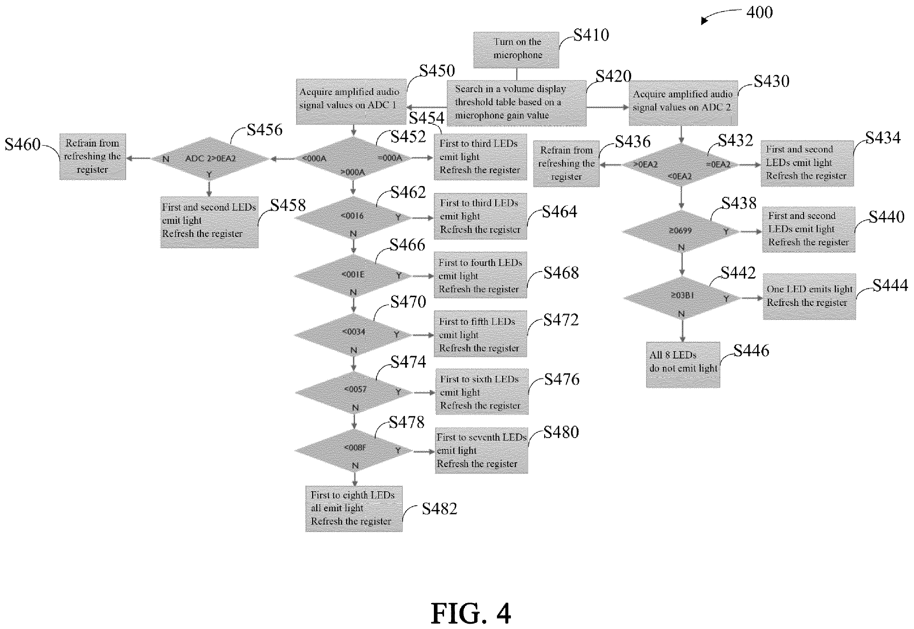

FIG. 4 shows an example flowchart 400 of using a volume detection module to determine, from 8 RGB LEDs, a number of LEDs that emit light when a microphone gain value is 12 dB as an example. When the user turns on the microphone device in step S410, it first proceeds to step S420 to search for the corresponding volume display threshold table based on the current microphone gain value. The microphone gain value may be within the range of 0 to 27 dB and may be set or adjusted by the user. In the example shown in FIG. 4, the microphone gain value is, for example, 12 dB, and accordingly, the volume display threshold table found in step S420 is as shown in Table 1.

By default, the volume detection module reads the acquisition port ADC 2 once every 10 us for a total of 2000 times (i.e., once every 20 ms), and outputs a maximum value thereon. Similarly, it reads the acquisition port ADC 1 in next 20 ms. A switch is performed the two acquisition ports every 20 ms for alternate outputs, and 2000 signal values are acquired on each acquisition port. The value on the acquisition port ADC 2 is first read, referring to step S430.

First, during a first time of reading the acquisition port, a value of the second amplified signal resulting from amplifying the current audio input signal twice by the first stage and second stage amplifiers is read on the acquisition port ADC 2. The value is compared with data (hexadecimal number) in the volume display threshold table (e.g., Table 1) corresponding to the current microphone gain value of 12 dB.

When the maximum value of 2000 second amplified signals acquired on the acquisition port ADC 2 is equal to 0EA2 in step S432, it is determined in step S434 that the first and second RGB LEDs will be caused to emit light, and a record in the register is refreshed to a number of 2 RGB LEDs that will emit light. When the maximum value of the second amplified signals on the acquisition port ADC 2 is greater than 0EA2 in step S432, it may be determined that at least 2 RGB LEDs will emit light, and the register is not refreshed in step S436. When the maximum value of the second amplified signals on the acquisition port ADC is less than 0EA22 in step S432, it proceeds to a next step S438 to compare the maximum value of the second amplified signals on the acquisition port ADC 2 with a threshold of 0699 that causes 2 RGB LEDs to emit light.

If the value on the acquisition port ADC 2 is greater than or equal to 0699 in step S438, the volume detection module determines in step S440 that the first and second RGB LEDs will be caused to emit light, and the number of LEDs that will emit light in the register is refreshed to 2. If the value on the acquisition port ADC 2 is less than 0699 in step S438, it proceeds to step S442.

Similarly, if the value on the acquisition port ADC 2 is greater than or equal to 03B1 in step S442, it is determined in step S444 that only the first RGB LED will be caused to emit light, and the number of LEDs that will emit light recorded in the register is updated to 1. If the value on the acquisition port ADC 2 is less than 03B1 in step S442, the volume detection module instructs the display driving module to cause all the 8 RGB LEDs to refrain from emitting light, as shown in step S446.

Then, during a second time of reading the acquisition port in the next 20 ms, it switches to reading a value on the acquisition port ADC 1, that is, a value of the first amplified signal resulting from amplifying the current audio input signal once by the first stage amplifier, as shown in step S450. Similarly, acquisition on the acquisition port ADC 1 is performed 2000 times within 20 ms, and a maximum value is compared with the data (hexadecimal number) in the volume display threshold table (e.g., Table 1) corresponding to the current microphone gain value of 12 dB.

When the maximum value of the first amplified signals on the acquisition port ADC 1 is equal to 000A in step S452, it is determined in step S454 that the first, second, and third RGB LEDs will be caused to emit light, and the number of RGB LEDs that will emit light in the register is refreshed to 3. When the maximum value of the first amplified signals on the acquisition port ADC 1 is less than 000A in step S452, it may be determined that less than 3 RGB LEDs will emit light, and then it proceeds to step S456 to determine whether the value of the second amplified signal on the ADC 2 is greater than 0EA2: if yes, it is determined in step S458 that the first and second RGB LEDs will be caused to emit light, and the volume detection module refreshes the number of LEDs that will emit light in the register to 2; and if not (that is, the value on the ADC 2 is less than or equal to 0EA2), the register is not refreshed in step S460.

When the maximum value of the first amplified signals on the acquisition port ADC 1 is greater than 000A in step S452, it proceeds to a next step S462 to determine whether the maximum value of the first amplified signals on the acquisition port ADC 1 is less than a threshold of 0016 that causes 3 RGB LEDs to emit light: if yes, it is determined in step S464 that 3 RGB LEDs will be caused to emit light, and the number of LEDs that will emit light in the register is refreshed to 3; and if not (that is, the value on the ADC 1 is greater than or equal to 0016), it proceeds to a next step S466.

The next step includes comparing the value on the acquisition port ADC 1 with hexadecimal thresholds causing various numbers of LEDs to emit light that are defined in the volume display threshold table corresponding to the microphone gain value of 12 dB, to determine a number of RGB LEDs that will emit light. These steps are similar to the above step S462 describing whether to cause 3 LEDs to emit light.

For example, it is determined in step S466 whether the maximum value of the first amplified signals on the acquisition port ADC 1 is less than a threshold of 001E that causes 4 RGB LEDs to emit light: if yes, it is determined in step S468 that the first to fourth RGB LEDs will be caused to emit light, and the number of LEDs that will emit light in the register is refreshed to 4; and if not (that is, the value on the ADC 1 is greater than or equal to 001E), it proceeds to a next step S470.

It is determined in step S470 whether the maximum value of the first amplified signals on the acquisition port ADC 1 is less than a threshold of 0034 that causes 5 RGB LEDs to emit light: if yes, it is determined in step S472 that the first to fifth RGB LEDs will be caused to emit light, and the number of LEDs that will emit light in the register is refreshed to 5; and if not (that is, the value on the ADC 1 is greater than or equal to 0034), it proceeds to a next step S474.

Similarly, it is determined in step S474 whether the maximum value of the first amplified signals on the acquisition port ADC 1 is less than a threshold of 0057 that causes 6 RGB LEDs to emit light: if yes, it is determined in step S476 that the first to sixth RGB LEDs will be caused to emit light, and the number of LEDs that will emit light in the register is refreshed to 6; and if not (that is, the value on the ADC 1 is greater than or equal to 0057), it proceeds to a next step S478.

Next, it is determined in step S478 whether the maximum value of the first amplified signals on the acquisition port ADC 1 is less than a threshold of 008F that causes 7 RGB LEDs to emit light: if yes, it is determined in step S480 that the first to seventh RGB LEDs will be caused to emit light, and the number of LEDs that will emit light in the register is refreshed to 7; and if not (that is, the value on the ADC 1 is greater than or equal to 008F), it is determined in step S482 that all the 8 RGB LEDs in the group of LEDs will be caused to emit light, and the number of LEDs that will emit light in the register is refreshed to 8.

During a third time of reading a value of the amplified signal on the acquisition port in next 20 ms, it switches back to reading of the acquisition port ADC 2, and the method of step S430 to step S446 is performed again. In this way, the method shown in FIG. 4 is performed circularly. Subsequently, a signal value switch between the acquisition ports ADC 2 and ADC 1 and a refresh of the volume level to be displayed that is recorded in the register are performed every 20 ms. Therefore, the values acquired at the second, fourth, sixth, ... and 2n^{th} times are obtained from the acquisition port ADC 1, and the values acquired at the first, third, fifth, ... and (2n-1)^{th} times are obtained from the acquisition port ADC 2 (n=1, 2, ...).

Referring back to FIG. 3, in step S340, the volume level is displayed in real time by the volume display unit according to the volume level to be displayed currently. In some examples, the volume detection module reads the register, for example, once every 150 ms, and sends an instruction to the volume display unit. The display driving module drives a corresponding number of RGB LEDs to emit light according to the received volume level to be displayed, i.e., a value of the number of RGB LEDs that will emit light stored in the register, thereby displaying the volume level in real time. For example, if the value stored in the register is 5, the volume detection module sends an instruction to the volume display unit to enable the display driving module to drive the first to fifth RGB LEDs to emit light.

In one or more embodiments of the present inventive subject matter, the method for displaying a volume level in real time only requires directly outputting the audio input signal to the acquisition port ADC of the volume detection module after it is amplified in two stages by the amplifier module. The volume detection module may be implemented using an 8-bit processing unit. Moreover, the method of the present inventive subject matter may include no any step of audio coding-decoding processing or digital-to-analog conversion processing, thereby realizing, with low costs, real-time display of a volume level of an audio signal during picking-up of the audio signal.

The description of embodiments has been presented for the purposes of illustration and description as mentioned above. According to the above description, appropriate modifications and alterations may be made to the embodiments, or these modifications and alterations may be obtained from practicing the methods. For example, unless otherwise specified, one or more of the described methods may be implemented via an appropriate apparatus and/or combination of apparatuses. The methods may be implemented by executing stored instructions with one or more logic apparatuses (e.g., processors) in combination with one or more additional hardware elements (such as storage apparatuses, memories, hardware network interfaces/antennas, switches, actuators, or clock circuits). In addition to the sequence described in the present application, the described methods and associated actions may also be performed in parallel and/or simultaneously in various sequences. The described system is essentially illustrative, and may include additional elements and/or omit elements. The subject matter of the present inventive subject matter includes all novel and non-obvious combinations of the various disclosed systems and configurations and additional features, functions, and/or properties.

Elements in various embodiments of the modules, elements and components used to implement the method provided by the present inventive subject matter can be manufactured as one or more electronic devices residing on a same chip or in a chipset, including but not limited to an array of fixed or programmable logic elements (such as transistors or gates). One or more elements in the various embodiments of the device described herein may be further implemented in whole or in part as one or more instruction sets, which may be arranged to be executed on one or more fixed or programmable logic element arrays (such as microprocessors, embedded processors, IP cores, digital signal processors, FPGAs, ASSPs, and ASICs).

Examples of one or more implementations of the present inventive subject matter are described in the following clauses:
Clause 1. An apparatus for displaying a volume level in real time, comprising:
   at least one microphone sensor configured to acquire an audio input signal;
   an amplifier module comprising a first stage amplifier and a second stage amplifier, wherein the first stage amplifier is configured to amplify the audio input signal into a first amplified signal, and wherein the second stage amplifier is configured to amplify the first amplified signal into a second amplified signal;
   a volume detection module configured to compare at least one of the first amplified signal and the second amplified signal with a volume display threshold to determine a volume level to be displayed; and
   a volume display unit configured to display the volume level in real time.
Clause 2. The apparatus according to clause 1, further comprising a resistor isolator configured to attenuate the audio input signal before the amplifier module performs amplification, wherein the resistor isolator is configured to attenuate the audio input signal by a factor of 13.5.
Clause 3. The apparatus according to clause 1 or 2, wherein the first stage amplifier and the second stage amplifier have amplification factors different from each other, wherein the first stage amplifier is configured to amplify the audio input signal by a factor of 2.56 to generate the first amplified signal, and wherein the second stage amplifier is configured to amplify the first amplified signal by a factor of 120.5 to generate the second amplified signal.
Clause 4. The apparatus according to any one of clauses 1 to 3, further comprising a gain feedback module configured to enable a user to adjust a microphone gain value according to the volume level displayed in real time by the volume display unit, and feed the microphone gain value to the volume detection module.
Clause 5. The apparatus according to any one of clauses 1 to 4, wherein the volume detection module is further configured to determine a volume display threshold corresponding to the microphone gain value based on the microphone gain value.
Clause 6. The apparatus according to any one of clauses 1 to 5, wherein the volume detection module is further configured to send the volume level to be displayed to the volume display unit, and wherein the volume level to be displayed comprises a number of RGB LEDs in a group of LEDs that are caused to emit light.
Clause 7. The apparatus according to any one of clauses 1 to 6, wherein the volume display unit comprises a display driving module, wherein the display driving module is also configured to drive, according to the volume level to be displayed, the corresponding number of RGB LEDs to emit light.
Clause 8. The apparatus according to any one of clauses 1 to 7, wherein the group of LEDs are arranged to emit light of different colors according to the volume level to be displayed, and wherein the group of LEDs comprise 8 RGB LEDs arranged in an annular shape.
Clause 9. The apparatus according to any one of clauses 1 to 8, wherein the gain feedback module is further configured to send an audio output signal resulting from processing with the microphone gain value to user equipment through a conversion interface, and wherein the conversion interface comprises a USB-Type C conversion interface.
Clause 10. The apparatus according to any one of clauses 1 to 9, wherein the audio input signal is an analog signal, and wherein the apparatus comprises no audio coding-decoding processing or digital-to-analog conversion processing.
Clause 11. A method for displaying a volume level in real time, comprising the following steps:
   acquiring, by at least one microphone sensor, an audio input signal;
   amplifying, by a first stage amplifier of an amplifier module, the audio input signal into a first amplified signal, and amplifying, by a second stage amplifier of the amplifier module, the first amplified signal into a second amplified signal;
   comparing, by a volume detection module, at least one of the first amplified signal and the second amplified signal with a volume display threshold to determine a volume level to be displayed; and
   displaying, by a volume display unit, the volume level in real time.
Clause 12. The method according to clause 11, further comprising attenuating, by a resistor isolator, the audio input signal before the amplifier module performs amplification, wherein the resistor isolator is configured to attenuate the audio input signal by a factor of 13.5.
Clause 13. The method according to clause 11 or 12, wherein the first stage amplifier and the second stage amplifier have amplification factors different from each other, wherein the first stage amplifier is configured to amplify the audio input signal by a factor of 2.56 to generate the first amplified signal, and wherein the second stage amplifier is configured to amplify the first amplified signal by a factor of 120.5 to generate the second amplified signal.
Clause 14. The method according to any one of clauses 11 to 13, further comprising enabling, by a gain feedback module, a user to adjust a microphone gain value according to the volume level displayed in real time by the volume display unit, and feeding the microphone gain value to the volume detection module.
Clause 15. The method according to any one of clauses 11 to 14, further comprising determining, by the volume detection module, a volume display threshold corresponding to the microphone gain value based on current the microphone gain value.
Clause 16. The method according to any one of clauses 11 to 15, further comprising sending the volume level to be displayed from the volume detection module to the volume display unit, wherein the volume level to be displayed comprises a number of RGB LEDs in a group of LEDs that are caused to emit light.
Clause 17. The method according to any one of clauses 11 to 16, further comprising driving, by a display driving module of the volume display unit according to the volume level to be displayed, the corresponding number of RGB LEDs to emit light.
Clause 18. The method according to any one of clauses 11 to 17, further comprising emitting, by the group of LEDs, light of different colors according to the volume level to be displayed, wherein the group of LEDs comprise 8 RGB LEDs arranged in an annular shape.
Clause 19. The method according to any one of clauses 11 to 18, further comprising sending an audio output signal resulting from processing with the microphone gain value from the gain feedback module to user equipment through a conversion interface, wherein the conversion interface comprises a USB-Type C conversion interface.
Clause 20. The method according to any one of clauses 11 to 19, wherein the audio input signal is an analog signal, and wherein steps of the method comprise no audio coding-decoding processing or digital-to-analog conversion processing.

The selection of the terms used herein is intended to best explain the principles and practical applications of the embodiments or the improvements to technologies available on the market, or to enable other persons of ordinary skills in the art to understand the embodiments disclosed herein.

In the above, reference is made to the embodiments presented in the present disclosure. However, the scope of the present disclosure is not limited to the specifically described embodiments. On the contrary, any combination of the above features and elements, whether involving different embodiments or not, is contemplated to implement and practice the contemplated embodiments.

Moreover, although the embodiments disclosed herein may achieve advantages over other possible solutions or over the prior art, whether or not a given embodiment achieves a particular advantage does not limit the scope of the present disclosure. Therefore, the above aspects, features, embodiments, and advantages are merely illustrative and are not considered as elements or limitations of the appended claims, unless otherwise expressly recited in the claims.

Although the above content is directed at the embodiments of the present disclosure, other and further embodiments of the present disclosure may be devised without departing from the basic scope of the present disclosure, and the scope of the present disclosure is determined by the appended claims.

## Claims

1. An apparatus for displaying a volume level in real time, comprising:
at least one microphone sensor configured to pick up an audio input signal;
an amplifier module comprising a first stage amplifier and a second stage amplifier, wherein the first stage amplifier is configured to amplify the audio input signal into a first amplified signal, and wherein the second stage amplifier is configured to amplify the first amplified signal into a second amplified signal;
a volume detection module configured to compare at least one of the first amplified signal and the second amplified signal with a volume display threshold to determine a volume level to be displayed; and
a volume display unit configured to display the volume level in real time.

2. The apparatus according to claim 1, further comprising a resistor isolator configured to attenuate the audio input signal before the amplifier module performs amplification, wherein the resistor isolator is configured to attenuate the audio input signal by a factor of 27.

3. The apparatus according to claim 1 or 2, wherein the first stage amplifier and the second stage amplifier have amplification factors different from each other, wherein the first stage amplifier is configured to amplify the audio input signal by a factor of 2.56 to generate the first amplified signal, and wherein the second stage amplifier is configured to amplify the first amplified signal by a factor of 120.5 to generate the second amplified signal.

4. The apparatus according to any preceding claim, further comprising a gain feedback module configured to enable the user to adjust the microphone gain value according to the volume level displayed in real time by the volume display unit, and feed the microphone gain value to the volume detection module.

5. The apparatus according to claim 4, wherein the volume detection module is further configured to determine the volume display threshold corresponding to the microphone gain value based on the microphone gain value.

6. The apparatus according to any preceding claim, wherein the volume detection module is further configured to send the volume level to be displayed to the volume display unit, and wherein the volume level to be displayed comprises the number of RGB LEDs in a group of LEDs that are caused to emit light and preferably the volume display unit comprises a display driving module, wherein the display driving module is also configured to correspondingly drive, according to the volume level to be displayed, the number of RGB LEDs to emit light, and more preferably the group of LEDs comprise 8 RGB LEDs arranged in an annular shape, and wherein the group of LEDs are arranged to emit light of different colors according to the volume level to be displayed.

7. The apparatus according to any of claims 5 or 6, wherein the gain feedback module is further configured to send an audio output signal resulting from processing with the microphone gain value to user equipment through a conversion interface, and wherein the conversion interface comprises a USB-Type C conversion interface.

8. The apparatus according to any preceding claim, wherein the audio input signal is an analog signal, and wherein the apparatus comprises no audio coding-decoding processing or digital-to-analog conversion processing.

9. A method for displaying a volume level in real time, comprising the following steps:
acquiring, by at least one microphone sensor, an audio input signal;
amplifying, by a first stage amplifier of an amplifier module, the audio input signal into a first amplified signal, and amplifying, by a second stage amplifier of the amplifier module, the first amplified signal into a second amplified signal;
comparing, by a volume detection module, at least one of the first amplified signal and the second amplified signal with a volume display threshold to determine a volume level to be displayed; and
displaying, by a volume display unit, the volume level in real time.

10. The method according to claim 9, further comprising attenuating, by a resistor isolator, the audio input signal before the amplifier module performs amplification, wherein the resistor isolator is configured to attenuate the audio input signal by a factor of 27.

11. The method according to claim 9 or 10, wherein the first stage amplifier and the second stage amplifier have amplification factors different from each other, wherein the first stage amplifier is configured to amplify the audio input signal by a factor of 2.56 to generate the first amplified signal, and wherein the second stage amplifier is configured to amplify the first amplified signal by a factor of 120.5 to generate the second amplified signal.

12. The method according to any of claims 9 to 11, further comprising enabling, by a gain feedback module, the user to adjust the microphone gain value according to the volume level displayed in real time by the volume display unit, and feeding the microphone gain value to the volume detection module and preferably further comprising determining, by the volume detection module, the volume display threshold corresponding to the microphone gain value based on the microphone gain value.

13. The method according to any of claims 9 to 12, further comprising sending the volume level to be displayed from the volume detection module to the volume display unit, wherein the volume level to be displayed comprises a number of RGB LEDs in a group of LEDs that are caused to emit light and preferably
further comprising correspondingly driving, by a display driving module of the volume display unit according to the volume level to be displayed, the number of RGB LEDs to emit light, and more preferably
further comprising emitting, by the group of LEDs, light of different colors according to the volume level to be displayed, wherein the group of LEDs comprise 8 RGB LEDs arranged in an annular shape.

14. The method according to claim 13, further comprising sending an audio output signal resulting from processing with the microphone gain value from the gain feedback module to user equipment through a conversion interface, wherein the conversion interface comprises a USB-Type C conversion interface.

15. The method according to any of claims 9 to 14, the method is wherein the audio input signal is an analog signal, and wherein steps of the method comprise no audio coding-decoding processing or digital-to-analog conversion processing.
